(19) **Europäisches Patentamt / European Patent Office / Office européen des brevets**

(11) **EP 4 212 599 B1**

(12) **EUROPEAN PATENT SPECIFICATION**

(45) Date of publication and mention
of the grant of the patent:
**03.07.2024 Bulletin 2024/27**

(21) Application number: **22215399.1**

(22) Date of filing: **21.12.2022**

(51) International Patent Classification (IPC):
**C09D 183/04** (2006.01)  **C09D 183/14** (2006.01)

(52) Cooperative Patent Classification (CPC):
(C-Sets available)
**C09D 183/04; C09D 183/14**  (Cont.)

(54) **SELF-HEALING CERAMIC COATING AND PROCESS FOR FORMATION THEREOF**

**SELBSTHEILENDE KERAMISCHE BESCHICHTUNG UND VERFAHREN ZU DEREN HERSTELLUNG**

**REVÊTEMENT CÉRAMIQUE AUTO-CICATRISANT ET SON PROCÉDÉ DE FABRICATION**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **17.01.2022 US 202263300223 P**

(43) Date of publication of application:
**19.07.2023 Bulletin 2023/29**

(73) Proprietor: **Illinois Tool Works Inc.**
**Glenview IL 60025 (US)**

(72) Inventors:
• **SCHIRMER, Andrew**
  **Glenview, 60025 (US)**
• **HECKMAN, Reese**
  **Glenview, 60025 (US)**
• **SHOULDICE, Grant T.**
  **Glenview, 60025 (US)**

(74) Representative: **HGF**
**HGF Limited**
**1 City Walk**
**Leeds LS11 9DX (GB)**

(56) References cited:
**CN-A- 113 354 971    JP-A- H0 827 425**
**JP-A- H09 157 528    KR-B1- 102 164 573**

Remarks:
The file contains technical information submitted after the application was filed and not included in this specification

(52) Cooperative Patent Classification (CPC): (Cont.)

C-Sets
**C09D 183/04, C08K 5/372**

**Description**

FIELD OF THE INVENTION

The present invention in general relates to surface protection for equipment and vehicles and in particular, to a composition and process of imparting a durable ceramic coating amenable to self-healing to the surface of the equipment or vehicle.

BACKGROUND OF THE INVENTION

Exterior paint protection for vehicles has evolved to include undercoats, a pigmented color layer and a transparent topcoat. As a result, a vehicle exterior has a high gloss finish. Yet as the topcoat is degraded through mechanical abrasion and chemical processes, the finish diminishes. In order to restore the finish and provide an additional layer of protection, waxes, have traditionally been used. While waxes provide some protection, that protection is typically short-lived, attracts grime, and requires considerable labor to apply. While reactive siloxane wax sealants have improved upon natural wax based formulations, the durability of such sealants remains less than desirable and streaking therein are difficult to revise.

Still another class of surface protective products are spray on ceramic coatings. These products illustrate hard coatings that are difficult to revise. The ceramic coating adds silica or titanium dioxide for a harder longer-lasting protective coating. The purpose of these combined elements combined in a ceramic spray is to create a ceramic coating that keeps the car clean and shiny for a long time. Revision of ceramic coatings is possible but under conditions that are onerous for many users. As a result, a user must comprise one wide variety materials for exterior vehicle surfaces, including painted surfaces and glass.

While there are numerous automotive ceramic coatings currently on the market, there are few which are capable of self-healing. As a result, any chips or scratches in the coating must be repaired, which requires time and money. Furthermore, if any damage cuts completely through the coating, the clear coat of the vehicle is no longer protected by the coating and is exposed to the environment. Again, a manual repair would be required to correct this defect, in addition to any damage that occurs to the clear coat and/or paint in the meantime. Those that have a self-healing attribute only do so under conditions of temperature and/or aggressive solvents that may harm the substrate to be protected KR102164573 teaches a steel painting composition for a surface of a steel structure, which includes: 2 to 60% by weight of a modifying filler and 40 to 98% by weight of a performance modifier. Accordingly, the surface of the steel structure is strengthened, and an eco-friendly, physically and chemically stable coating is formed. The deterioration and corrosion are prevented in the long term.

Thus, there exists a need for a formulation and process of use thereof that overcomes the aforementioned limitations of the prior art in providing a ceramic coating to a vehicle surface to retain attributes of a ceramic coating while being self-healing under less stringent conditions. There further exists a need for the resulting coating.

SUMMARY OF THE INVENTION

An exterior body panel is provided that includes a substrate having a shape of the panel. A clear topcoat is on the panel. A cured composition of polysilazane or polysiloxane with interspersed disulfide moieties derived from disulfide monomers overlies the topcoat.

A ceramic generating composition kit is also provided that includes a first part that includes a polysilazane, and a solvent in which the polysilazane is dissolved. A second part stored separately from the first part includes monomer disulfide. Instructions are provided for the for combining the parts to form a moisture reactive coating composition.

A method for creating a ceramic coating on a topcoat overlying an exterior panel includes combining a first part including a polysilazane or polysiloxane, and a solvent in which said polysilazane or polysiloxane, is dissolved, with a second part stored separately from said first part that includes a monomer disulfide to form a reactive gel. The reactive gel cure is applied to the topcoat in ambient air. After allowing sufficient time, moisture cure of the reactive gel occurs and with evaporation of the solvent, the ceramic coating forms with disulfide bonds therein.

DETAILED DESCRIPTION OF THE PREFERRED EMBODIMENTS

The present invention has utility in forming a protective ceramic overlayer on a polymerized or resinous topcoat. An inventive coating exhibits self-healing properties at reasonable temperatures, while providing a high contact angle with water of greater 90° and high gloss. In the context of a vehicle, the topcoat in turn overlies a pigmented color coat. While the present invention will be further detailed with respect a high gloss vehicle exterior surface, it is appreciated that the present is equally applicable to commercial equipment, furniture, countertops, and kitchen appliances where topcoats also include polyurethane varnishes. Formation of a ceramic is arrested through formation of an intermediate that is subsequently activated to form as silicate thereby affording an opportunity for revision. In addition to saving time and money required for repair or re-application of a damaged ceramic coating, an inventive coating affords a superior duration protection to the underlying surface.

Numerical ranges cited herein are intended to recite not only the end values of such ranges but the individual values encompassed within the range and varying in single units of the last significant figure. By way of example, a range of from 0.1 to 1.0 in arbitrary units according to the present invention also encompasses 0.2, 0.3, 0.4, 0.5, 0.6, 0.7, 0.8, and 0.9; each independently as lower and upper bounding values for the range.

Table 1 lists the major components of a polysilizane embodiment of the inventive ceramic coating composition.

Table 1 - Formulation of an inventive fully formulated polysilizane inventive composition

| Ingredient | Total Weight Percent |
| --- | --- |
| Polysilazane | 10-remainder |
| Solvent | 0-10 |
| Organic disulfide* | Stoichiometric excess to Si-N bonds |
| Coupling agent | 0-5 |
| Solvent | 0-10 |
| Wetting agent | 0-60 |
| Volatile oil | 0-5 |
| Additives | Each: 0-5 |
| Filler | 0-20 |
| *-stored separately from polysilazane until cure is desired | |

A polysilazane is present in some inventive embodiments is characterized by silicon-nitrogen bonds forming chains, rings, or combinations thereof and characterized by the formula $[R^1R^2Si\text{-}NR^3]_n$ where $R^1$, $R^2$, and $R^3$ are each independently H, $C_1$-$C_6$ alkyl, $C_6$-$C_{10}$ aryl, and fluorinated alkyl and aryls thereof; and n is an integer value of from 2 to 30. Methylated polysilazanes and Polysilazanes having trifluoropropyl constituents have been well studied for the modified hydrophobicity imparted relative to perhydropolysilazane. Rochow, E G., "Polymeric methylsilazanes" Pure and Applied Chemistry, vol. 13, no. 1-2, 1966, pp. 247-262; and Breed. L.W. et al "New Synthetic Methods for Silicon-Nitrogen Polymers, AD0908905, AFML-TR-69-20, Part IV, (Nov. 1972), pages 16-20.

Table 2 lists the major components of a polysiloxane embodiment of the inventive ceramic coating composition.

Table 2 - Formulation of an inventive fully polysiloxane formulated composition

| Ingredient | Total Weight Percent |
| --- | --- |
| Polysiloxane | 10-remainder |
| Solvent | 0-10 |
| Organic disulfide | 1-5 |
| Coupling agent | 0-5 |
| Wetting agent | 0-60 |
| Volatile oil | 0-5 |
| Additives | Each: 0-5 |
| Filler | 0-20 |

In still other embodiments, the coating is based on a polysiloxane present as the coating polymer. The polysiloxane being formed by reaction of an ethylenically unsaturated-containing organopolysiloxane, with an organohydrogenpolysiloxane, and a disulfide containing monomer or oligomer. The crosslinking polymer is generally a hydride functional siloxane. Hydride functional siloxanes operative herein illustratively include methylhydrosiloxanedimethylsiloxane copolymer with 15-50 mole % methylhydrosiloxane, SiH terminated polydimethylsiloxanes, and combinations thereof. Catalysts operative herein include Catalysts suitable for promoting the reaction to form the polysiloxane includes, acids, bases or a complex of platinum in alcohol, xylene, divinylsiloxanes or cyclic vinylsiloxanes.

Part A part contains the ethylenically unsaturated-containing silicone and the catalyst and the part B part contains the hydride functional siloxane. It is appreciated that a disulfide containing monomer can be present in either an ethylenically unsaturated-containing silicone of a part A or a part B hydride functional siloxane.

A solvent or system of solvents is selected that is chemically compatible with the polysilazane and in which the polysilazane is soluble or at least suspended. Solvents operative herein illustratively include butyl acetate, xylene, n-butyl ether, diethylene glycol butyl ether acetate, methylcyclohexane, n-octane and butyl titanate. It is appreciated that the film forming properties of the polysilazane as the solvent evaporates an influence the quality of the polysilazane film with too thin a film being incomplete while too thick a film of polysilazane tends crack and craze upon heating.

A disulfide monomer is present to cross-link with the polysilazane and is believed to the functionality that imparts the self-healing attributes of the present invention. A disulfide operative herein is selected to include at least two moieties reactive under ambient moisture cure conditions separated by a backbone from a sulfur-sulfur bond. Disulfides operative herein illustratively include: allithiamine, cystine, dithionitrobenzoic acid, fursultiamine, glutathione disulfide, homo-cysteine, hydroxy($C_2$-$C_6$ alkyl) disulfides, bis[(tri $C_2$-$C_6$alkoxyysilyl) $C_2$-$C_6$alkyl] disulfides, dipentamethylenethiuram tetrasulfide, tetramethylthiuram disulfide, 2,2'-dithiobis(benzothiazole), thiram, $C_2$-$C_6$ alkyl thiram disulfide, prosultiamine, pyritinol, and combinations thereof.

A coupling agent is present to promote adhesion to the underlying layers of the surface imperfection namely the topcoat alone, or the topcoat and underlying pigmented color coat; as well as enhanced bonding to an overlying ceramic coating. Coupling agents operative herein illustratively include 3-aminopropyltrimethoxysilane, 3-aminopropyltriethoxysilane, 3-glycidoxypropyltrimethoxysilane, 3-glycidoxypropyltriethoxysilane, (3-glycidoxypropyl) bis(trimethylsiloxy)methylsilane, (3-glycidoxypropyl)methyldiethoxysilane, (3-glycidoxypropyl) dimethylethoxysilane, 3-(mercaptopropyl)triethoxysilane, (3-glycidoxypropyl)methyldimethoxysilane, methacryloxymethyltriethoxysilane, methacryloxymethyltrimethoxysilane, methacryloxypropyldimethylethoxysilane, methacryloxypropyldimethylmethoxysilane, ethacryloxypropylmethyldimethoxysilane, methacryloxypropyltriethoxysilane, methoxymethyltrimethylsilane, 3-methoxypropyltrimethoxysilane, 3-methacryloxypropyldimethylchlorosilane, methacryloxypropylmethyldichlorosilane, methacryloxypropyltrichlorosilane, 3-isocyanatopropyldimethylchlorosilane, 3-isocyanatopropyltriethoxysilane, bis(3-triethoxysilylpropyl)tetrasulfide, and combinations thereof.

A volatile oil is present to provide a solution a curable composition that flows on a surface that upon drying creates a paste that can be buffed to a layer of polysilazane that moisture cures with the disulfide. Volatile oils operative herein include $C_8$-$C_{16}$ alkanes, such as branched alkanes that illustratively include isododecane, isodecane and isohexadecane; linear or cyclic silicone oils, having 2 to 10 silicon atoms with moieties that are in each occurrence independently H, $C_1$-$C_{10}$ alkyl or $C_1$-$C_{10}$ alkoxy. Specific volatile silicone oils operative herein illustratively include octamethylcyclotetrasiloxane, decamethylcyclopentasiloxane, dodecamethylcyclohexasiloxane, heptamethylhexyltrisiloxane, methyloctyltrisiloxane, hexamethyldisiloxane, octamethyltrisiloxane, decamethyltetrasiloxane, and dodecamethylpentasiloxane; and mixtures of any of the aforementioned.

Several additives are readily included in an inventive formulation that illustratively include light and heat stabilizers to maintain clarity of the cured fill, adhesion promoters, flow control additives, pigments and dyes and combinations thereof. Generally, each of the aforementioned additives is independently present from 0 to 5 total weight percent.

While fillers are typically unnecessary in an inventive repair composition owing to the small dimensions of the microbrasions and surface imperfections being corrected, such fillers are optionally present to afford impart hardness and visual effects. It is appreciated that the inclusion of fillers is particularly advantageous if a ceramic overcoat is not used to protect the UV cured fill. Filler particulates operative in the present invention illustratively include mica flakes, pigments, talc, alumina, silica, titania, microspheroids, and combinations thereof.

An inventive repair composition typically has a fully formulated viscosity in the range of from 100 to 1,000 cps at 20 °C and is flowable prior to cure. It is appreciated that a substrate in need of repair is often mounted vertically or even inverted such as while the repair composition should flow slightly prior to drying to a paste consistency, the composition should also have sufficient viscosity as to not excessively run form a vertical or inverted substrate.

After application, the coating adheres to polar moieties extending from the substrate surface, such as a vehicle topcoat. The polysilazane then cures through a hydrolysis reaction with ambient moisture. Depending on ambient conditions, cure is complete in 8 to 72 hours after initial application, while an initial cure step before polishing requires approximately 3 minutes. Without intending to be bound to a particular theory, it is believed that a polymer network forms that is composed of polysilazane and the organic disulfide to impart the self-healing characteristics to the resultant coating.

The reversible disulfide bonds within the cured polymer network are facile under certain reaction conditions thereby providing the self-healing property to the inventive coating.

Reaction conditions to induce disulfide scission include chemical exposures to reducing agents that include monothiols, such as β-mercaptoethanol (BME), dithiothritol (DTT); basic pH solutions such as NaOH solutions; basic surfactants; UV light exposure; heat; or a combination thereof.

After exposure to air exhausted from a heat gun for from 1 to 10 minutes, the coating is capable of up to 100% self-healing efficiency, which is defined by the following equation:

$$SHE = \left(1 - \frac{w}{w_0}\right) \times 100\%$$

where SHE is defined as the self-healing efficiency, where 0% represents a completely un-healed scratch and 100% represents a completely healed scratch; $w_0$ is the initial width of a scratched/damaged region, and w is the final width of a scratched/damaged region.

Once a coating is in place and has incurred damage, self-healing in this system occurs through three main steps:

1. The bulk coating undergoes viscous flow, or "creeping" to fill in the damaged region of the coating. To facilitate this process, a heat gun or other inducer of disulfide scission reaction is used.
2. The polymer chains diffuse across the resulting interface. These first two steps are driven primarily by mass transport phenomena.
3. Covalent bonds are reformed between unpaired sulfur atoms in the polymer chains (which result from the breaking of covalent bonds upon damage to the coating) on adjoining chains, thereby repairing the bulk mechanical properties of the material. This process is defined herein as "self-healing".

For the first two phases to occur in the context of thermal disulfide scission, the temperature must be above a critical threshold of the glass transition temperature, $T_g$. Below $T_g$, the polymer chains within the coating are retained in place and unable to move, so limited bulk flow or chain diffusion occurs. Above $T_g$, the polymer chains become mobile and bulk flow/chain diffusion are possible. To ensure that the $T_g$ is exceeded, a heat gun is used. Typical $T_g$ temperatures of inventive coatings are between 70 and 140 °C.

Due to the crosslinking reaction between the polysilazane and the disulfide, the disulfide is packaged as a second part, while the polysilazane is packaged in a first part, the two parts combined immediately before application as gel formation begins thereafter. The remaining components are split between the two parts based only on storage compatibility.

An exemplary method for application includes:

1. Ensure that the vehicle has been thoroughly washed, degreased, and is free of any dirt/contaminants before applying the composition,
2. Combine a mixture of first part containing polysilazane or polysiloxane composition and second part disulfide solution, mix well. Make sure to only use a small amount of each component, as the system may gel quickly,
3. Dispense the mixed coating onto a suede applicator pad or an applicator sponge,
4. Rub the applicator over a small area of the vehicle, taking note of where the application boundaries are,
5. Wait 3 minutes,
6. Using a clean, dry microfiber towel, lightly polish off the coated region until no more "cloudiness" is visible on the coated surface, and
7. Repeat steps 3-6 until the entire vehicle has been coated. If the mixed coating becomes too viscous for application, repeat step 2 with smaller area to be applied.

## EXAMPLES

These examples demonstrate the processes to be claimed in this patent filing. It should be remarked that other additions and modifications as known in the art are also to be covered.

Example 1

An inventive composition is provided based on first part containing: 10 total weight percent butyl acetate, 24.5 total weight percent octamethylcyclotetrasiloxane, 24.5 total weight percent decamethylcyclopentasiloxane, 0.5 total weight percent diethylene glycol monobutyl ether, 0.5 total weight percent of 3-(aminopropyl) triethoxysilane, and 22 total weight percent polysilazane; with a second part containing 7 total weight percent of 2-hydroxyethyl disulfide and a remainder of butyl acetate. Upon combining the two parts, a ceramic gel forms that when applied to a vehicle surface forms a coating intentionally formed to include splattered drips. Three minutes after application, the coating is buffed to provide a ceramic hard coat with a surface contact angle of more than 90°.

Example 2

The process of Example 1 is repeated with the with 6 total weight percent mica in place of a like amount of decamethylcyclopentasiloxane. A similar cure profile results.

Example 3

The coating of claim 1 is exposed to the output of a heat gun until the coating soften and flows to self-heal the drips.

Example 4

An inventive composition is provided based on first part containing: 29.3 total weight diethoxydimethoxysilane, 11.7 total weight percent tetraethyl orthosilane, 1.7 total weight percent silicon tetrachloride, 0.9 total weight percent tetrabutyl orthotitanate, 2.5 total weight percent of bis[(triethoxysilyl)propyl] disulfide are combined with 50 total weight percent butyl acetate, and a remainder of polyether siloxane copolymer (approximately 4 total weight percent). Upon acid cure, a ceramic gel forms that when applied to a vehicle surface forms a coating intentionally formed to include splattered drips. Three minutes after application, the coating is buffed to provide a ceramic hard coat with a surface contact angle of more than 90°.

Example 5

The process of Example 4 is repeated with the exclusion of silicon tetrachloride and a base catalyst with a molar equivalent increase in the amount of tetraethyl orthosilicate. The resulting coating has like properties.

Example 6

The process of Example 5 is repeated with a platinum catalyst in place of the base. The resulting coating has like properties.

Certain embodiments of the invention are described in the following numbered clauses:

Clause 1. An exterior body panel comprising:

a substrate having a shape of the panel;
a clear topcoat on said substrate;
a cured composition of polysilazane or polysiloxane with interspersed disulfide moieties derived from disulfide monomers.

Clause 2. The panel of clause 1 wherein said polysilazane is present and is a perhydrosilazane.

Clause 3. The panel of clause 1 wherein said polysilazane has the formula $[R^1R^2Si\text{-}NR^3]_n$ where $R^1$, $R^2$, and $R^3$ are each independently $C_1$-$C_6$ alkyl, $C_6$-$C_{10}$ aryl, fluorinated $C_1$-$C_6$ alkyl, fluorinated $C_6$-$C_{10}$ aryl; and n is an integer value of from 2 to 30.

Clause 4. The panel of clause 1 wherein said polysiloxane is present.

Clause 5. The panel of any one of clause 1 to 4 further comprising a silane coupling agent.

Clause 6. The panel of any one of clause 1 to 5 wherein said disulfide monomers include at least one of: allithiamine, cystine, dithionitrobenzoic acid, fursultiamine, glutathione disulfide, homocysteine, hydroxy($C_2$-$C_6$ alkyl) disulfides, bis[(tri $C_2$-$C_6$alkoxyysilyl) $C_2$-$C_6$alkyl] disulfides, dipentamethylenethiuram tetrasulfide, tetramethylthiuram disulfide, 2,2'-dithiobis(benzothiazole), thiram, $C_2$-$C_6$ alkyl thiram disulfide, prosultiamine, pyritinol, and combinations thereof.

Clause 7. A ceramic generating composition kit comprising:

a first part comprising:

a polysilazane or polysiloxane; and
a solvent in which said polysilazane or said polysiloxane is dissolved;

a second part stored separately from said first part and comprising a monomer disulfide; and instructions for the combination of said part A and said part B to form a coating composition.

Clause 8. The composition of clause 7 further comprising a silane coupling agent.

Clause 9. The composition of clause 7 or 8 further comprising at least additive of a light stabilizer, a heat stabilizer, an adhesion promoter, a flow control additive, a pigment, a dye, or a combination thereof.

Clause 10. The composition of any one of clauses 7 to 9 further comprising a particulate filler.

Clause 11. The composition of any one of clauses 7 to 10 further comprising a volatile oil miscible with said solvent;

Clause 12. A method for creating a ceramic coating on a topcoat overlying an exterior panel comprising:

combining a first part comprising: a polysilazane or a polysiloxane, a solvent in which said polysilazane or said polysiloxane is dissolved, with a second part stored separately from said first part and comprising a monomer disulfide to form a reactive gel;
applying said reactive gel to the topcoat in ambient air; and
allowing sufficient time for moisture cure of said reactive gel and evaporation of said solvent to form the ceramic coating with disulfide bonds therein.

Clause 13. The method of clause 12 wherein sufficient time is from 1 to 10 minutes.

Clause 14. The method of any one of clauses 12 or 13 further comprising cleaning the topcoat prior to said applying.

Clause 15. The method of any one of clauses 12 to 14 wherein monomer disulfide is present in a solution and a silane coupling agent is present in said reactive gel.

Clause 16. The method of any one of clauses 12 to 15 further comprising a volatile oil in said reactive gel.

Clause 17. The method of any one of clauses 12 to 16 further comprising self-healing ceramic coating.

Clause 18. The method of clause 17 wherein said self-healing comprises breaking disulfide bonds and allowing said ceramic coating to flow. further comprising formed a dam around said repair composition to prior to said exposing.

Clause 19. The method of clause 18 wherein breaking disulfide bonds occurs under reaction conditions of at least one of chemical exposures to reducing agents, basic pH solutions; UV light exposure; heat; or a combination thereof.

Clause 20. The method of clause 19 wherein the reaction condition is application of heat above the glass transition temperature of said ceramic coating.

Clause 21. The method of clause 20 wherein the heat is applied with a heat gun.

Patent documents and publications mentioned in the specification are indicative of the levels of those skilled in the art to which the invention pertains.
The foregoing description is illustrative of particular embodiments of the invention, but is not meant to be a limitation upon the practice thereof. The following claims, including all equivalents thereof, are intended to define the scope of the invention.

**Claims**

1.  An exterior body panel comprising:

a substrate having a shape of the panel;
a clear topcoat on said substrate;
a cured composition of polysilazane or polysiloxane with interspersed disulfide moieties derived from disulfide monomers.

2. The panel of claim 1 wherein said polysilazane is present and is a perhydrosilazane or wherein said polysilazane has the formula $[R^1R^2Si\text{-}NR^3]_n$ where $R^1$, $R^2$, and $R^3$ are each independently $C_1\text{-}C_6$ alkyl, $C_6\text{-}C_{10}$ aryl, fluorinated $C_1\text{-}C_6$ alkyl, fluorinated $C_6\text{-}C_{10}$ aryl; and n is an integer value of from 2 to 30 or wherein said polysiloxane is present.

3. The panel of claim 1 or claim 2 further comprising a silane coupling agent.

4. The panel of any one of claims 1 to 3 wherein said disulfide monomers include at least one of: allithiamine, cystine, dithionitrobenzoic acid, fursultiamine, glutathione disulfide, homocysteine, hydroxy($C_2\text{-}C_6$ alkyl) disulfides, bis[(tri $C_2\text{-}C_6$alkoxyysilyl) $C_2\text{-}C_6$alkyl] disulfides, dipentamethylenethiuram tetrasulfide, tetramethylthiuram disulfide, 2,2'-dithiobis(benzothiazole), thiram, $C_2\text{-}C_6$ alkyl thiram disulfide, prosultiamine, pyritinol, and combinations thereof.

5. A ceramic generating composition kit comprising:

   a first part comprising:

   a polysilazane or polysiloxane; and
   a solvent in which said polysilazane or said polysiloxane is dissolved;

   a second part stored separately from said first part and comprising a monomer disulfide; and
   instructions for the combination of said part A and said part B to form a coating composition.

6. The composition of claim 5 further comprising a silane coupling agent.

7. The composition of claim 5 or 6 further comprising at least additive of a light stabilizer, a heat stabilizer, an adhesion promoter, a flow control additive, a pigment, a dye, or a combination thereof.

8. The composition of any one of claims 5 to 7 further comprising a particulate filler.

9. The composition of any one of claims 5 to 8 further comprising a volatile oil miscible with said solvent;

10. A method for creating a ceramic coating on a topcoat overlying an exterior panel comprising:

    combining a first part comprising: a polysilazane or a polysiloxane, a solvent in which said polysilazane or said polysiloxane is dissolved, with a second part stored separately from said first part and comprising a monomer disulfide to form a reactive gel;
    applying said reactive gel to the topcoat in ambient air; and
    allowing sufficient time for moisture cure of said reactive gel and evaporation of said solvent to form the ceramic coating with disulfide bonds therein.

11. The method of claim 10 wherein sufficient time is from 1 to 10 minutes.

12. The method of any one of claims 10 or 11 further comprising cleaning the topcoat prior to said applying.

13. The method of any one of claims 10 to 12 wherein monomer disulfide is present in a solution and a silane coupling agent is present in said reactive gel.

14. The method of any one of claims 10 to 13 further comprising a volatile oil in said reactive gel.

15. The method of any one of claims 10 to 14 further comprising self-healing ceramic coating and optionally wherein said self-healing comprises breaking disulfide bonds and allowing said ceramic coating to flow. further comprising formed a dam around said repair composition to prior to said exposing, and optionally wherein breaking disulfide bonds occurs under reaction conditions of at least one of chemical exposures to reducing agents, basic pH solutions; UV light exposure; heat; or a combination thereof, and optionally wherein the reaction condition is application of heat above the glass transition temperature of said ceramic coating and optionally wherein the heat is applied with a heat gun.

**Patentansprüche**

1. Außenkarosserieteil, aufweisend:

   ein Substrat in der Form des Teils;
   eine klare Deckschicht auf dem Substrat;
   eine gehärtete Zusammensetzung aus Polysilazan oder
   Polysiloxan mit beigefügten Disulfideinheiten, die von Disulfidmonomeren abgeleitet sind.

2. Teil nach Anspruch 1, wobei das Polysilazan vorhanden ist und ein Perhydrosilazan ist oder wobei das Polysilazan die Formel $[R^1R^2Si\text{-}NR^3]_n$ aufweist, wobei $R^1$, $R^2$ und $R^3$ jeweils unabhängig voneinander $C_1$-$C_6$-Alkyl, $C_6$-$C_{10}$-Aryl, fluoriertes $C_1$-$C_6$-Alkyl, fluoriertes $C_6$-$C_{10}$-Aryl sind; und n ein ganzzahliger Wert von 2 bis 30 ist oder wobei das Polysiloxan vorliegt.

3. Teil nach Anspruch 1 oder Anspruch 2, das ferner ein Silankopplungsmittel aufweist.

4. Teil nach einem der Ansprüche 1 bis 3, wobei die Disulfidmonomere zumindest eines von Folgendem beinhalten: Allithiamin, Cystin, Dithionitrobenzoesäure, Fursultiamin, Glutathiondisulfid, Homocystein, Hydroxy($C_2$-$C_6$-alkyl)di-sulfide, bis[(Tri-$C_2$-$C_6$alkoxysilyl)$C_2$-$C_6$alkyl]disulfide, Dipentamethylenthiuramtetrasulfid, Tetramethylthiuramdisul-fid, 2,2'-Dithiobis(benzothiazol), Thiram, $C_2$-$C_6$-Alkylthiramdisulfid, Prosulthiamin, Pyritinol und Kombinationen davon.

5. Kit für eine keramikerzeugende Zusammensetzung, aufweisend:
   einen ersten Teil, aufweisend:

   ein Polysilazan oder Polysiloxan; und
   ein Lösungsmittel, in dem das Polysilazan oder das Polysiloxan gelöst ist;
   einen zweiten Teil, der getrennt von dem ersten Teil gelagert wird und ein Monomerdisulfid aufweist; und
   Anweisungen für die Kombination des Teils A und des Teils B zur Bildung einer Beschichtungszusammensetzung.

6. Zusammensetzung nach Anspruch 5, die ferner ein Silankopplungsmittel aufweist.

7. Zusammensetzung nach Anspruch 5 oder 6, die ferner zumindest ein Additiv in Form eines Lichtstabilisators, eines Wärmestabilisators, eines Haftvermittlers, eines Flusssteuerungsadditivs, eines Pigments, eines Farbstoffs oder einer Kombination davon aufweist.

8. Zusammensetzung nach einem der Ansprüche 5 bis 7, die ferner einen teilchenförmigen Füllstoff aufweist.

9. Zusammensetzung nach einem der Ansprüche 5 bis 8, die ferner ein flüchtiges Öl aufweist, das mit dem Lösungsmittel mischbar ist;

10. Verfahren zum Erzeugen einer keramischen Beschichtung auf einer Deckschicht, die über einem Außenteil liegt, aufweisend:

    Kombinieren eines ersten Teils, aufweisend: ein Polysilazan oder ein Polysiloxan, ein Lösungsmittel, in dem das Polysilazan oder das Polysiloxan gelöst ist, mit einem zweiten Teil, der getrennt von dem ersten Teil gelagert wird und ein Monomerdisulfid aufweist, um ein reaktives Gel zu bilden;
    Aufbringen des reaktiven Gels auf die Deckschicht in Umgebungsluft; und
    Gewähren von ausreichend Zeit für die Feuchtigkeitshärtung des reaktiven Gels und das Verdampfen des Lösungsmittels, um die keramische Beschichtung mit Disulfidbindungen darin zu bilden.

11. Verfahren nach Anspruch 10, wobei die ausreichende Zeit von 1 bis 10 Minuten beträgt.

12. Verfahren nach einem der Ansprüche 10 oder 11, das ferner das Reinigen der Deckschicht vor dem Aufbringen aufweist.

13. Verfahren nach einem der Ansprüche 10 bis 12, wobei Monomerdisulfid in einer Lösung vorhanden ist und ein Silankopplungsmittel in dem reaktiven Gel vorhanden ist.

14. Verfahren nach einem der Ansprüche 10 bis 13, das ferner ein flüchtiges Öl in dem reaktiven Gel aufweist.

15. Verfahren nach einem der Ansprüche 10 bis 14, das ferner eine selbstheilende keramische Beschichtung aufweist und wobei die Selbstheilung optional das Brechen von Disulfidbindungen und das Fließenlassen der keramischen Beschichtung aufweist. ferner das Ausbilden eines Damms um die Reparaturzusammensetzung herum bis vor dem Aussetzen aufweisend, und wobei das Brechen von Disulfidbindungen optional unter Reaktionsbedingungen in Form von zumindest einem aus chemischen Aussetzungen gegenüber Reduktionsmitteln, basischen pH-Lösungen; UV-Belichtung; Wärme; oder einer Kombination davon erfolgt, und wobei die Reaktionsbedingung optional das Aufbringen von Wärme oberhalb der Glasübergangstemperatur der Keramikbeschichtung ist und wobei die Wärme optional mit einer Wärmepistole aufgebracht wird.

**Revendications**

1. Panneau de carrosserie extérieur comprenant :

   un substrat ayant une forme du panneau ;
   une couche de finition transparente sur ledit substrat ;
   une composition durcie de polysilazane ou de polysiloxane avec des fractions disulfure intercalées dérivées de monomères disulfure.

2. Panneau selon la revendication 1, dans lequel ledit polysilazane est présent et est un perhydrosilazane ou dans lequel ledit polysilazane a la formule $[R^1R^2Si-NR^3]_n$ où $R^1$, $R^2$, et $R^3$ sont chacun indépendamment un alkyle en $C_1$-$C_6$, un aryle en $C_6$-$C_{10}$, un alkyle en $C_1$-$C_6$ fluoré, un aryle en $C_6$-$C_{10}$ fluoré ; et n est une valeur entière de 2 à 30 ou dans lequel ledit polysiloxane est présent.

3. Panneau selon la revendication 1 ou la revendication 2, comprenant en outre un agent de couplage silane.

4. Panneau selon l'une quelconque des revendications 1 à 3, dans lequel lesdits monomères disulfure comprennent au moins un parmi : allithiamine, cystine, acide dithionitrobenzoïque, fursultiamine, disulfure de glutathion, homocystéine, disulfures d'hydroxy(alkyle en $C_2$-$C_6$), disulfures de bis[alkyle en $C_2$-$C_6$ (tri alcoxyysilyl en $C_2$-$C_6$)], tétra-sulfure de dipentaméthylènethiurame, disulfure de tétraméthylthiurame, 2,2'-dithiobis( benzothiazole), thirame, di-sulfure d'alkylthirame en $C_2$-$C_6$, prosultiamine, pyritinol et des combinaisons de ceux-ci.

5. Kit de composition génératrice de céramique comprenant :
   une première partie comprenant :

   un polysilazane ou un polysiloxane ; et
   un solvant dans lequel ledit polysilazane ou ledit polysiloxane est dissous ;
   une deuxième partie stockée séparément de ladite première partie et comprenant un disulfure monomère ; et
   des instructions pour la combinaison de ladite partie A et de ladite partie B pour former une composition de revêtement.

6. Composition selon la revendication 5, comprenant en outre un agent de couplage silane.

7. Composition selon la revendication 5 ou 6, comprenant en outre au moins un additif d'un stabilisant à la lumière, d'un stabilisant à la chaleur, d'un promoteur d'adhérence, d'un additif de contrôle d'écoulement, d'un pigment, d'un colorant ou d'une combinaison de ceux-ci.

8. Composition selon l'une quelconque des revendications 5 à 7, comprenant en outre une charge particulaire.

9. Composition selon l'une quelconque des revendications 5 à 8, comprenant en outre une huile volatile miscible avec ledit solvant ;

10. Procédé pour la création d'un revêtement céramique sur une couche de finition recouvrant un panneau extérieur comprenant :

la combinaison d'une première partie comprenant : un polysilazane ou un polysiloxane, un solvant dans lequel ledit polysilazane ou ledit polysiloxane est dissous, avec une deuxième partie stockée séparément de ladite première partie et comprenant un disulfure monomère pour former un gel réactif ;

l'application dudit gel réactif sur la couche supérieure à l'air ambiant ; et

le fait de laisser suffisamment de temps pour le durcissement à l'humidité dudit gel réactif et l'évaporation dudit solvant pour former le revêtement céramique avec des liaisons disulfure dans celui-ci.

11. Procédé selon la revendication 10, dans lequel le temps suffisant est de 1 à 10 minutes.

12. Procédé selon l'une quelconque des revendications 10 ou 11, comprenant en outre le nettoyage de la couche de finition avant ladite application.

13. Procédé selon l'une quelconque des revendications 10 à 12, dans lequel le disulfure monomère est présent dans une solution et un agent de couplage silane est présent dans ledit gel réactif.

14. Procédé selon l'une quelconque des revendications 10 à 13, comprenant en outre une huile volatile dans ledit gel réactif.

15. Procédé selon l'une quelconque des revendications 10 à 14, comprenant en outre un revêtement céramique auto-réparable et, facultativement, dans lequel ledit auto-réparable comprend la rupture des liaisons disulfure et le fait de laisser ledit revêtement céramique s'écouler, comprenant en outre la formation d'un barrage autour de ladite composition de réparation avant ladite exposition, et facultativement dans lequel la rupture des liaisons disulfure se produit dans des conditions de réaction d'au moins une parmi les expositions chimiques à des agents réducteurs, des solutions à pH basique ; l'exposition à la lumière UV ; la chaleur ; ou une combinaison de ceux-ci, et facultativement dans lequel la condition de réaction est l'application de chaleur au-dessus de la température de transition vitreuse dudit revêtement céramique et facultativement dans lequel la chaleur est appliquée avec un pistolet thermique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 102164573

**Non-patent literature cited in the description**

- **ROCHOW, E G.** Polymeric methylsilazanes. *Pure and Applied Chemistry,* 1966, vol. 13 (1-2), 247-262

- **BREED. L.W. et al.** New Synthetic Methods for Silicon-Nitrogen Polymers. *AD0908905, AFML-TR-69-20,* November 1972, 16-20